# EUROPEAN PATENT APPLICATION

(11) **EP 4 699 922 A1**
(43) Date of publication of application: **25.02.2026**
(21) Application number: 25800690.7
(22) Date of filing: 10.04.2025
(51) Int. Cl.: B63B 79/40, B63H 25/04, G05D 1/224, G05D 1/229, G05D 1/24, G01C 21/20, B63B 49/00, B63B 79/20, G05D 109/30

(54) **METHOD AND APPARATUS FOR CONTROLLING HEADING OF SHIP**

(30) Priority: 08.05.2024 KR 20240060789; 30.10.2024 KR 20240151427
(71) Applicant: Avikus Co., Ltd., Seoul 06234 (KR)
(72) Inventor: OH, Jinyoung, Seoul 06234 (KR); CHOI, Hwi Yong, Seoul 06234 (KR); CHOI, Hujae, Seoul 06234 (KR); LEE, Do Yeop, Seoul 06234 (KR)
(74) Representative: Zacco Sweden AB
(86) International application number: PCT/KR2025/004872
(87) International publication number: WO 2025/234624

(57) **Abstract**

According to an embodiment of the present disclosure, a method of controlling a heading of a vessel may include obtaining a preset course and a course over ground (COG) of the vessel, obtaining a position that is spaced apart from a current position of the vessel by a preset distance along the COG of the vessel, setting a virtual course that extends parallel to the preset course, by using at least one of the current position of the vessel and the obtained position, and generating a command to control the heading of the vessel to follow the virtual course.

## Description

### Technical Field

The present disclosure relates to a method and device for controlling a heading of a vessel.

### Background Art

During operation of a vessel, when the vessel deviates significantly from a desired course or when a local disturbance occurs, a problem may arise in which the vessel fails to navigate stably along the desired course, resulting in a zigzagging trajectory. This may lead to an unstable trajectory in a situation where the vessel needs to frequently correct its direction to follow the desired course. Such a problem may result in several negative consequences, such as an increase in fuel consumption, an increase in voyage time, or a reduction in the maneuverability of the vessel. Accordingly, a need has emerged for a method for stably aligning the direction in which the bow of the vessel is facing, with a desired course.

The above-mentioned background art is technical information possessed by the inventor for the derivation of the present disclosure or acquired during the derivation of the present disclosure, and cannot necessarily be said to be a known technique disclosed to the general public prior to the filing of the present disclosure.

### Disclosure of Invention

### Technical Problem

Some embodiments according to the present disclosure provide a method and device for controlling a heading of a vessel. Objectives of the present disclosure are not limited to the foregoing, and other unmentioned objectives or advantages of the present disclosure would be understood from the following description and be more clearly understood from the embodiments of the present disclosure. In addition, it would be appreciated that the objectives and advantages of the present disclosure may be implemented by means provided in the claims and a combination thereof.

### Solution to Problem

As a technical solution for achieving the technical objectives described above, a first aspect of the present disclosure may provide a method of controlling a heading of a vessel, the method including: obtaining a preset course and a course over ground (COG) of the vessel; obtaining a position that is spaced apart from a current position of the vessel by a preset distance along the COG of the vessel; setting a virtual course that extends parallel to the preset course, by using at least one of the current position of the vessel and the obtained position; and generating a command to control the heading of the vessel to follow the virtual course.

In addition, other methods and systems for implementing the present disclosure, and a computer-readable recording medium having recorded thereon a computer program for executing the methods may be further provided.

Other aspects, features, advantages other than those described above will become apparent from the following drawings, claims, and detailed description of the present disclosure.

### Advantageous Effects of Invention

According to the present disclosure, the heading of a vessel may be effectively controlled.

### Brief Description of Drawings

FIG. 1 is a diagram schematically illustrating an example of an engine-based vessel to which the present disclosure may be applied.
FIG. 2 is a diagram for describing an example of a vessel control system according to an embodiment.
FIG. 3 is a flowchart for outlining a method of controlling a heading of a vessel, according to an embodiment of the present disclosure.
FIG. 4 is a diagram for describing an example of a method of controlling a heading of a vessel, according to an embodiment of the present disclosure.
FIG. 5 is a diagram for describing another example of a method of controlling a heading of a vessel, according to an embodiment of the present disclosure.
FIGS. 6A to 6C are diagrams for describing another example of a method of controlling a heading of a vessel, according to an embodiment of the present disclosure.
FIGS. 7A to 7C are diagrams for describing another example of a method of controlling a heading of a vessel, according to an embodiment of the present disclosure.
FIG. 8 is a flowchart for describing an example of a method of controlling a heading of a vessel, according to an embodiment of the present disclosure.
FIG. 9 is a diagram for describing an example of an internal configuration of a control device according to an embodiment of the present disclosure.

### Best Mode for Carrying out the Invention

As a technical solution for achieving the technical objectives described above, a first aspect of the present disclosure may provide a method of controlling a heading of a vessel, the method including: obtaining a preset course and a course over ground (COG) of the vessel; obtaining a position that is spaced apart from a current position of the vessel by a preset distance along the COG of the vessel; setting a virtual course that extends parallel to the preset course, by using at least one of the current position of the vessel and the obtained position; and generating a command to control the heading of the vessel to follow the virtual course.

A second aspect of the present disclosure may provide a control device including: at least one memory; and at least one processor, wherein the at least one processor is configured to obtain information about a position that is spaced apart from a current position of a vessel by a preset distance along a COG of the vessel, generate a virtual course that includes the information about the position and is parallel to a preset course, generate a command to control a heading of the vessel to follow the virtual course, and transmit the command to an onboard control device.

A third aspect of the present disclosure may provide a computer-readable recording medium having recorded thereon a program for causing a computer to execute the method according to the first aspect.

In addition, other methods and systems for implementing the present disclosure, and a computer-readable recording medium having recorded thereon a computer program for executing the methods may be further provided.

Other aspects, features, advantages other than those described above will become apparent from the following drawings, claims, and detailed description of the present disclosure.

### Mode for the Invention

Advantages and features of the present disclosure and a method for achieving them will be apparent with reference to embodiments of the present disclosure described below together with the accompanying drawings. The present disclosure may, however, be embodied in many different forms and should not be construed as being limited to the embodiments set forth herein, and all changes, equivalents, and substitutes that do not depart from the spirit and technical scope of the present disclosure are encompassed in the present disclosure. These embodiments are provided such that the present disclosure will be thorough and complete, and will fully convey the concept of the present disclosure to those of skill in the art. In describing the present disclosure, detailed explanations of the related art are omitted when it is deemed that they may unnecessarily obscure the gist of the present disclosure.

Terms used herein are for describing particular embodiments and are not intended to limit the scope of the present disclosure. The singular expression also includes the plural meaning as long as it is not inconsistent with the context. As used herein, terms such as "comprises," "includes," or "has" specify the presence of stated features, numbers, stages, operations, components, parts, or a combination thereof, but do not preclude the presence or addition of one or more other features, numbers, stages, operations, components, parts, or a combination thereof.

Some embodiments of the present disclosure may be represented by functional block components and various processing operations. Some or all of the functional blocks may be implemented by any number of hardware and/or software elements that perform particular functions. For example, the functional blocks of the present disclosure may be embodied by at least one microprocessor or by circuit components for a certain function. In addition, for example, the functional blocks of the present disclosure may be implemented by using various programming or scripting languages. The functional blocks may be implemented by using various algorithms executable by one or more processors. In addition, the present disclosure may employ known technologies for electronic settings, signal processing, and/or data processing. Terms such as "mechanism", "element", "unit", or "component" may be used in a broad sense and are not limited to mechanical or physical components.

In addition, connection lines or connection members between components illustrated in the drawings are merely exemplary of functional connections and/or physical or circuit connections. Various alternative or additional functional connections, physical connections, or circuit connections between components may be present in a practical device.

In the present specification, a "vessel" may refer to a ship having various forms depending on its size or purpose. For example, a vessel may have various sizes and forms ranging from large ships to small boats, and may include a tanker, a container vessel, a passenger ship, a salvage vessel, a fishing boat, a coastal patrol ship, a warship, and the like.

In the present specification, "heading" may refer to the direction of a vessel's bow. For example, heading control may refer to performing control to change the direction of a vessel's bow.

Hereinafter, embodiments will be described in detail with reference to the accompanying drawings. The embodiments may, however, be embodied in many different forms and should not be construed as being limited to the embodiments set forth herein.

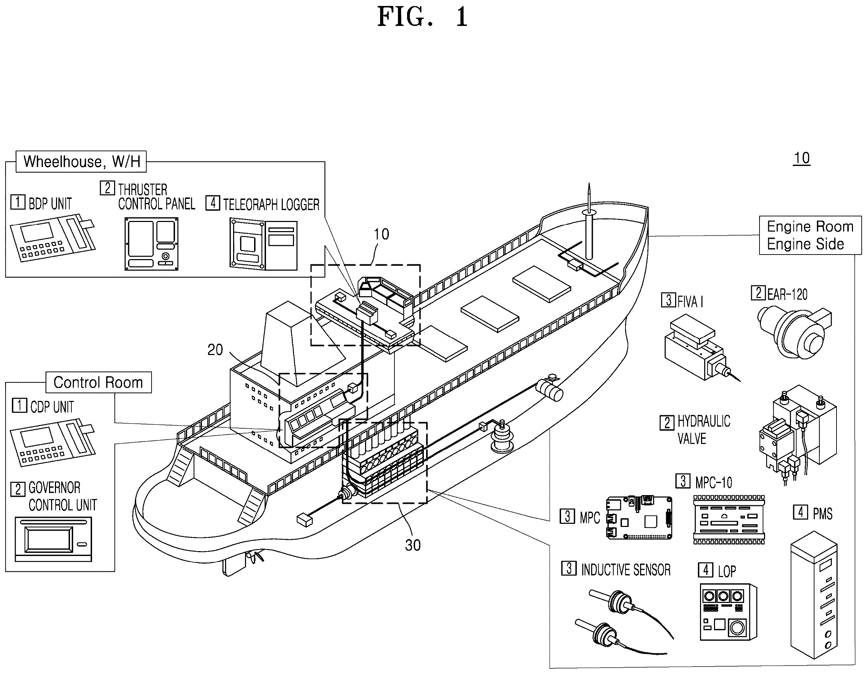

FIG. 1 is a diagram schematically illustrating an example of an engine-based vessel to which the present disclosure is applicable.

Referring to FIG. 1, it may be seen that a vessel 1 includes a wheelhouse 10, a control room 20, and an engine room 30. FIG. 1 illustrates only components necessary for the vessel 1 to which the present disclosure is applied, but an actual vessel 1 to which the present disclosure is applied may, of course, include other components in addition to those illustrated in FIG. 1.

The wheelhouse 10 is a physical space in which steering and management of the vessel 1 are performed, and a plurality of devices and panels for efficiently managing and controlling the operation of the vessel are included in the wheelhouse 10. Referring to FIG. 1, a bridge display panel (BDP) unit, a thruster control panel, and a telegraph logger are arranged in the wheelhouse 10.

The BDP unit is a device that displays and manages various pieces of data in the wheelhouse of the vessel. The BDP unit may visually provide various pieces of information about the operation of the vessel to a captain or a crew member on board the vessel, thereby enabling a crew member in the wheelhouse 10 to identify the status of the vessel in real time and to promptly take necessary actions. The BDP unit may display various pieces of important data regarding a radar, a navigation system, engine status, a speed, information about a course, and the like.

The thruster control panel is a device that controls thrusters of the vessel 1. A thruster is mainly used for precise position adjustment or berthing of the vessel 1, and may be used to finely adjust the direction of the vessel 1. The thruster control panel is generally designed to simultaneously control a plurality of thrusters (e.g., a bow thruster or a stern thruster).

The telegraph logger is a device that records engine commands and actual engine responses in the vessel 1. When the captain or another crew member in the wheelhouse issues a specific command (e.g., to move ahead or astern, or to accelerate or decelerate) to the engine, this command is recorded in the telegraph logger, and the engine's actual response is also recorded in the telegraph logger. Information recorded in the telegraph logger may play an important role in helping the captain or a crew member maintain a log of the operation of the vessel 1 and analyze the log when a problem occurs.

The control room 20 is a physical space where major systems of the vessel 1 are controlled and monitored, and an engine, a generator, and various electrical systems of the vessel 1 may be managed through the control room 20. Referring to FIG. 1, it may be seen that a centralized display panel (CDP) unit and a governor control unit are arranged in the control room 20.

The CDP unit of FIG. 1 is a CDP that monitors and controls the status of various systems and pieces of equipment of the vessel 1. By displaying various pieces of data in real time in the control room 20, the CDP unit enables crew members in the control room 20 to comprehensively identify the status of the vessel 1. The CDP unit includes a plurality of monitors, and various pieces of information is displayed on each monitor, such as the vessel's engine status, fuel consumption, electrical systems, fire alarm, or pump status. In addition, through this panel, a crew member working in the control room 20 may remotely control the major systems of the vessel 1 or, when necessary, check an alarm and take appropriate actions.

The governor control unit of FIG. 1 is a panel that controls a governor, which adjusts the engine speed of the vessel. The governor has a function of keeping the revolutions per minute (RPM) of the engine constant or adjusting the RPM as necessary, and this function of the governor is essential for efficient engine operation, fuel consumption optimization, and overall power management.

In FIG. 1, the engine room 30 refers to a physical space where an engineer (crew member) on board the vessel 1 may control and monitor an engine and a power system of the vessel 1, and Fuel Injection Valve Actuator - Intelligent (FIVA-I), a multi-purpose controller (MPC), Exhaust gas Analyzer - Recorder 120 (EAR-120), a hydraulic valve, a power management system (PMS), a local operating panel (LOP), and an inductive sensor are arranged in the engine room 30.

The FIVA-I in the engine room 30 is a device that controls an electronic fuel injection valve. The FIVA-I may precisely adjust the amount of fuel entering each cylinder of the engine, thereby maintaining optimal combustion and maximizing engine efficiency. In "FIVA-I", the term "Intelligent" indicates that the FIVA-I may automatically adjust the optimal fuel injection according to engine operating conditions. That is, by controlling the fuel injection timing and amount for the engine, the FIVA-I plays an important role in increasing combustion efficiency and minimizing exhaust gas, thereby making it possible to optimize the performance of the engine of the vessel 1, reduce the fuel consumption of the vessel 1, and comply with environmental regulations.

The MPC and the MPC-10 in the engine room 30 refer to MPCs. The MPC and the MPC-10 are multi-purpose control devices that monitor and control various systems of the engine of the vessel 1, and may monitor various parameters such as the temperature, pressure, or speed of the engine in real time, and automatically perform control or generate an alarm as necessary.

The PMS in the engine room 30 is a device that manages a power system of the vessel 1. The PMS may monitor the power demand of the vessel 1 and distribute the load of a generator evenly, thereby maintaining the stability of the power supply. In addition, the PMS may automatically adjust the operation or stoppage of the generator as necessary to prevent a power oversupply or a power shortage from occurring within the vessel 1.

The LOP in the engine room 30 is a panel for on-site control of a specific engine system or device. By providing an interface that allows an engineer on board the vessel 1 to directly manipulate a specific piece of equipment or system within the engine room 30 or to monitor the overall status, the LOP enables rapid manipulation of some systems of the vessel 1, thereby improving the speed of maintenance and emergency responses.

The EAR-120 in the engine room 30 is a device that analyzes and records the exhaust gas of the engine of the vessel 1. The EAR-120 may evaluate the engine's combustion state and emission level by monitoring, in real time, major components (e.g., NOₓ, SOₓ, or CO₂) in the exhaust gas. That is, the EAR-120 may help ensure that the values of various substances emitted from the vessel 1 comply with environmental regulations, and may provide information to an engineer (crew member) on board the vessel 1 to improve fuel efficiency by analyzing the engine's combustion efficiency.

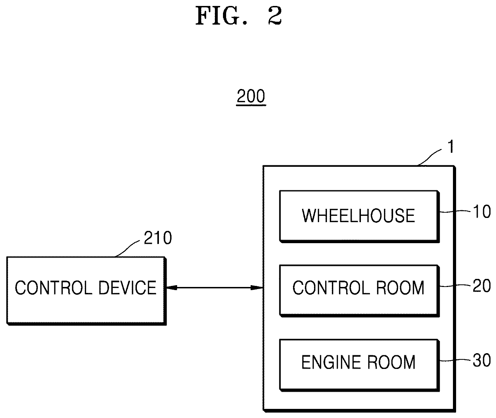

FIG. 2 is a diagram for describing an example of a vessel control system according to an embodiment.

In the present disclosure, a vessel control system 200 may refer to a system that controls the operation of a vessel. For example, the vessel control system 200 may control the heading of the vessel such that the vessel follows a certain course.

Referring to FIG. 2, the vessel control system 200 may include a control device 210 and the vessel 1. With respect to the vessel control system 200, FIG. 2 illustrates only components associated with the present disclosure. Thus, other general-purpose components in addition to those illustrated in FIG. 2 may be included in the vessel control system 200. In addition, although the control device 210 and the vessel 1 are illustrated as separate components in FIG. 2, the present disclosure is not limited thereto. For example, the control device 210 may be included in the vessel 1.

The control device 210 and the vessel 1 may be connected to each other via a wireless or wired method to communicate with each other. For example, the control device 210 and the vessel 1 may transmit and receive various pieces of data to and from each other via a wired or wireless communication method. For example, the control device 210 and the vessel 1 may communicate with each other via a satellite communication method.

For example, the control device 210 may obtain, from the vessel 1, various pieces of data that are used to control the operation of the vessel. For example, the control device 210 may obtain vessel data collected from each of the wheelhouse 10, the control room 20, and the engine room 30. For example, the control device 210 may receive, from the vessel 1, route data (or a preset course), a course over ground (COG) of the vessel, global positioning system (GPS) position data regarding the vessel, and the like.

As another example, the control device 210 may generate a control command for controlling the operation of the vessel and transmit the control command to the vessel 1. For example, a control command generated by the control device 210 may be transmitted to the control room 20 of the vessel 1.

As will be described below, the control device 210 may be a computing device that has its own computing capability. For example, the control device 210 may generate an operation plan for the vessel 1based on various pieces of information. For example, the control device 210 may obtain data regarding a departure point and/or a destination of the vessel 1, and may set a course for the vessel 1. For example, the control device 210 may set the course for the vessel 1 by further considering weather data. As another example, the control device 210 may receive a preset course from an external device. For example, the control device 210 may store the set course.

In an embodiment of the present disclosure, the control device 210 may generate a control command for controlling the heading of the vessel 1. In the present disclosure, the heading refers to the direction of the bow, and controlling the heading of the vessel 1 may be understood as controlling the direction in which the bow of the vessel 1 is pointing.

For example, the control device 210 may control the heading of the vessel 1 based on vessel data. For example, the control device 210 may receive vessel data from the vessel 1. For example, the control device 210 may control the heading of the vessel 1 to follow a preset course. However, the heading of the vessel 1 may fluctuate due to external environmental factors, such as ocean currents or wind.

In other words, to control the vessel 1 to follow a preset course, it is necessary to generate a heading control command for the vessel 1 by considering external environmental factors. In addition, due to the inertia from the large weight of the vessel 1, it may generally take time to change the heading of the vessel 1, and a phenomenon of overshooting or failing to reach a target heading may occur. In other words, to control the vessel 1 to follow a preset course, it is necessary to generate a heading control command for the vessel 1 by considering the inertia of the vessel 1.

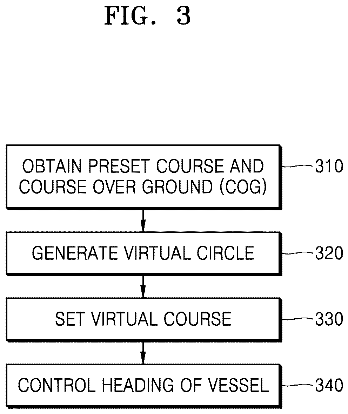

The present disclosure discloses a method of controlling the heading of the vessel 1 by considering disturbances and inertia. Hereinafter, detailed descriptions will be provided with reference to FIGS. 3 to 9.

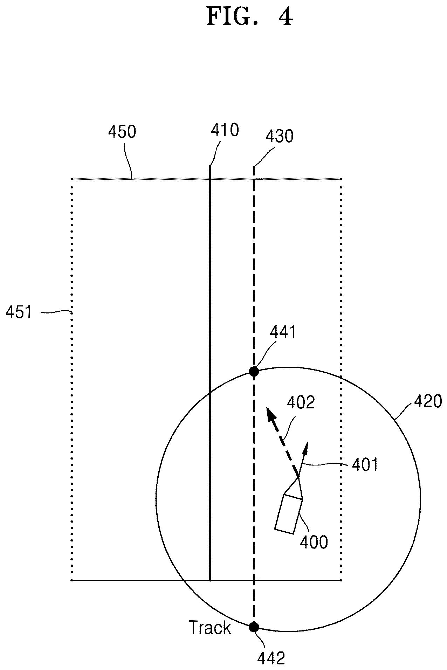

FIG. 3 is a flowchart for outlining a method of controlling a heading of a vessel, according to an embodiment of the present disclosure, and FIG. 4 is a diagram for describing an example of a method of controlling a heading of a vessel, according to an embodiment of the present disclosure.

In operation 310, a device may obtain a preset course and a course over ground (COG).

For example, the preset course and the COG may be a part of vessel data stored in the vessel 1. For example, the control device may receive, from the vessel, the preset course and the COG.

The preset course may refer to a part of a course plan that is set based on a departure point and a destination. For example, the preset course may be set based on a certain course planning algorithm. For example, the preset course may include a course that is set before a voyage begins. As another example, the preset course may include a course that is modified during a voyage.

The COG of the vessel may refer to the direction in which the vessel is actually moving with respect to the ground. For example, the COG of the vessel may be measured based on the direction in which the vessel is moving. For example, the COG may be measured in real time by using GPS equipment installed on the vessel. For example, the COG may be measured as an angle of the direction of travel of the vessel with respect to geographic north.

As described above, even when the heading of the vessel is toward the direction of the preset course, the COG of the vessel may differ from the preset course due to the influence of disturbances and inertia. Thus, to control the COG of the vessel to be similar to the preset course, it is necessary to control the heading of the vessel by considering disturbances and inertia.

In an embodiment of the present disclosure, based on a mismatch between the preset course and the COG of the vessel, the control device may perform a vessel heading control algorithm.

For example, the control device may obtain the preset course and the COG of the vessel, and compare them to determine whether their directions match. In addition, when it is determined that the two courses point in different directions, the control device may perform the vessel heading control algorithm.

In operation 320, based on a mismatch between the preset course and the COG of the vessel, the control device may generate a virtual circle. Here, that there is a mismatch between the preset course and the COG of the vessel may mean that the direction of the preset course and the COG are not identical to each other, or that a difference between the direction and the COG is greater than or equal to a predetermined threshold. For example, when an angular difference between the preset course and the COG of the vessel is greater than or equal to a predetermined threshold, it may be determined that the direction of the preset course and the COG do not match. As another example, the control device may determine whether the direction of the preset course and the COG of the vessel are identical to each other, based on a cross-track distance error between the preset course and the course on which the vessel is actually moving.

For example, as illustrated in FIG. 4, when the direction of a preset course 410 and a direction 401 of the course on which a vessel 400 is actually moving do not match, the control device may determine that the direction of the preset course 410 and the direction of the actual moving direction 401 do not match. Here, the direction 401 of the course on which the vessel 400 is actually moving may refer to the direction in which the heading of the vessel 400 is pointing before or when heading control of the vessel 400 is performed.

In an embodiment, the control device may generate a virtual circle having a predetermined radius based on the position of the vessel. For example, the control device may generate a virtual circle 420 having a predetermined radius, centered at the position of the vessel 400.

Here, the radius of the virtual circle may vary according to the position of the vessel. For example, the radius of the virtual circle may vary according to the distance between the vessel and the preset course. For example, the radius of the virtual circle may be adjusted according to a change in the position of the vessel. For example, the radius of the virtual circle may gradually increase as the vessel gets farther away from the preset course. As another example, the radius of the virtual circle may gradually decrease as the vessel moves closer to the preset course. A more detailed embodiment will be described below.

In an embodiment, an initial radius of the virtual circle may be preset by a user. For example, the initial radius of the virtual circle may be set based on vessel data. For example, the initial radius of the virtual circle may be set based on the length of the vessel, and may be set to N times the length of the vessel. In another embodiment, when the radius of the virtual circle is initialized, the radius of the virtual circle may be set to the initial size. For example, when an area in which the virtual circle is generated is changed, the radius of the virtual circle may be initialized, and in this case, the radius of the virtual circle may be set to the initial size.

In an embodiment, the control device may obtain a position that is spaced apart from the current position of the vessel by a preset distance along the COG of the vessel. The control device may generate a virtual circle by using the obtained position, or may replace the virtual circle with the obtained position. The obtained position may correspond to a point within the virtual circle. As the control device obtains the position, the generating of the virtual circle may be omitted. In this case, the radius of the virtual circle may correspond to the distance between the obtained position and the current position of the vessel. In this case, the control device may also generate a virtual course, as described below, by using only the obtained position. According to the present disclosure, the virtual circle is a concept used to generate a virtual course, and may be omitted or modified according to an embodiment.

In operation 330, the control device may set a virtual course.

In an embodiment, the virtual course may be generated to pass through an arbitrary point that is spaced apart from the vessel by a preset distance or by the radius of the virtual circle. For example, the virtual course may be set based on a line extending from a straight line that passes through two arbitrary points on the virtual circle.

In an embodiment, the virtual course may be set to be parallel to the preset course. For example, based on determining an arbitrary point on the virtual circle, a straight line that passes through the arbitrary point and is parallel to the preset course may be determined. For example, the determined straight line may meet the virtual circle at another point in addition to the arbitrary point. The control device may set, as the virtual course, a line extending from the determined straight line.

For example, as illustrated in FIG. 4, the control device may set a virtual course 430 that passes through two arbitrary points 441 and 442 on the virtual circle 420 and is parallel to the preset course 410. Although FIG. 4 illustrates the virtual course 430 passing through two arbitrary points, the virtual course 430 may pass through a single arbitrary point, or the arbitrary points may be omitted such that the virtual course 430 is generated to pass through the current position of the own vessel and be parallel to the preset course 410.

In addition, in an embodiment, the virtual course may be set to be generated inside a predetermined limit area 450. Here, the limit area 450 may be set based on the preset course 410. For example, the limit area 450 may be set as an area in which the distance from the preset course 410 is less than or equal to a preset limit value. The distance from the preset course 410 may be preset by a user. Thus, the limit area 450 may also be preset by a user. In addition, because the virtual course 430 may be set to be generated inside the limit area 450, that the virtual course 430 is set at the farthest distance from the preset course 410 may mean that the virtual course 430 includes a boundary line 451 of the limit area 450. When the virtual course 430 is set to include the boundary line 451, the vessel 400 may be controlled to follow the virtual course 430 that is parallel to the preset course 410, even when the position of the vessel 400 is outside the limit area 450. In other words, by setting the limit area 450 and setting the virtual course to be generated inside the limit area 450, the heading of the vessel 400 may be controlled to direct the vessel 400 toward the preset course 410 even when the vessel 400 is outside the limit area 450. A more detailed embodiment will be described below.

In another embodiment, the virtual course 430 may be set to be shifted in position according to the position of the vessel 400 within the limit area 450. For example, within the limit area 450, an area in which the vessel 400 is located may be distinguished as a first area, and an area on the opposite side of the preset course 410 may be distinguished as a second area, and the virtual course 400 may be set such that the position at which it is generated is changed based on a change in the position of the vessel 400. For example, when the vessel 400 is moving within the first area so as to get closer to the preset course 410, the virtual course 430 generated in the first area may be set to be shifted in position to the second area. Accordingly, a rapid change in the heading direction may be prevented by considering the inertia of the vessel 400, and control stability may be improved. A more detailed embodiment will be described below.

Referring again to FIG. 3, in operation 340, the control device may generate a command to control the heading of the vessel 400 to follow the virtual course 430.

For example, referring to FIG. 4, when the virtual course 430 is generated through the above-described algorithm, the control device may generate a command to control the hull of the vessel 400 to turn until the heading of the vessel 400 matches a direction 402 for following the virtual course 430. In another aspect, the direction 402 for following the virtual course 430 may be understood as a target heading direction, which is the objective of the control.

In an embodiment, even when the heading direction 402 of the vessel 400 following the virtual course 430 has become parallel to the preset course 430 through a certain control process, the control device may continuously generate heading control commands. For example, the control device may generate a command to control the vessel 400 to maintain its heading. In other words, the heading control algorithm according to the present disclosure may further include, in addition to controlling the heading of the vessel 400 to follow the preset course 430, controlling the heading of the vessel 400 to be stably maintained after it has become parallel to the preset course 430, in order to prevent excessive use of the rudder due to disturbances and inertia. According to an embodiment, because the heading of the vessel 400 may be controlled to maintain a specific direction, use of the vessel's rudder may be minimized. A more detailed embodiment will be described below.

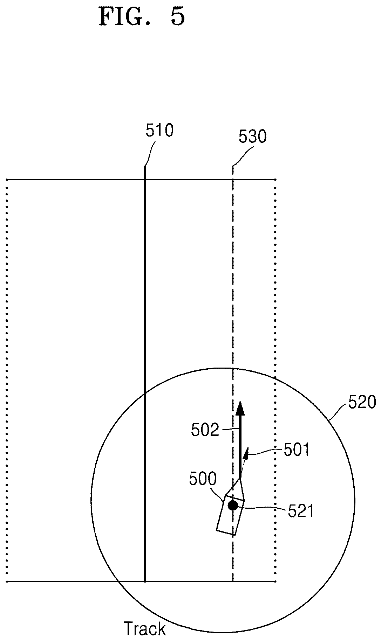

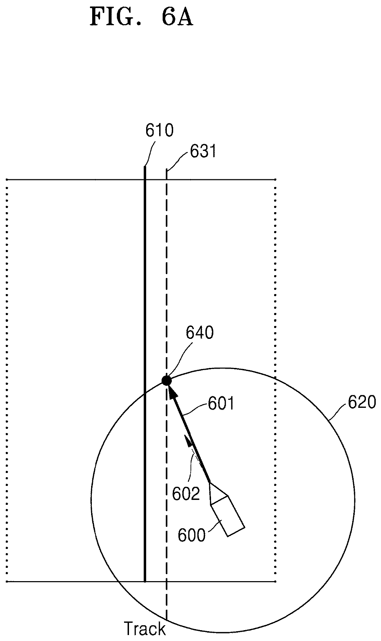

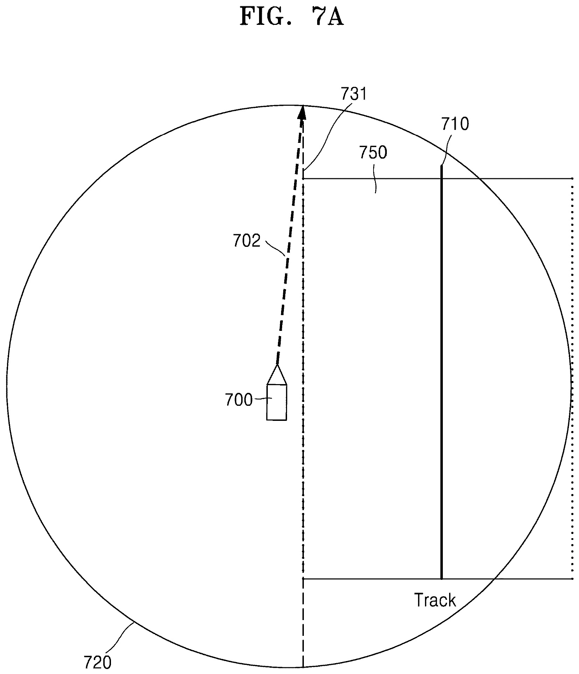

FIG. 5 is a diagram for describing another example of a method of controlling a heading of a vessel, according to an embodiment of the present disclosure, FIGS. 6A to 6C are diagrams for describing another example of a method of controlling a heading of a vessel, according to an embodiment of the present disclosure, and FIGS. 7A to 7C are diagrams for describing another example of a method of controlling a heading of a vessel, according to an embodiment of the present disclosure.

FIGS. 5 to 7C may be understood as diagrams for describing embodiments in which the heading of the vessel is controlled in correspondence with respective predetermined conditions. Here, the predetermined conditions may include the position of the vessel, the heading of the vessel, and the like.

In an embodiment, referring to FIG. 5, based on a heading 501 of a vessel 500 being opposite to a preset course 510, the control device may set a virtual course 530 that passes through the center of the vessel 500 and is parallel to the preset course 510. The virtual course 530 may be set to pass through a center 521 of a virtual circle 520.

Referring to FIG. 5, when the heading 501 of the vessel 500 is opposite to the preset course 510, this may mean that a line extending along the heading 501 of the vessel 500 does not intersect the preset course 510.

The virtual course 530 may pass through the center 521 of the vessel 500 and be parallel to the preset course 510. The virtual course 530 may pass through the center 521 of the virtual circle 520, pass through two points (not shown) on the virtual circle 520, and be parallel to the preset course 510. The distance between the two points (not shown) where the virtual course 530 and the virtual circle 520 intersect may be equal to the diameter of the virtual circle 520.

The heading 501 of the vessel 500 may be controlled to follow the generated virtual course 530. That is, the heading 501 of the vessel 500 may be controlled to be directed toward a direction 502 for following the virtual course 530. In the example illustrated in FIG. 5, it may be understood that the hull of the vessel 500 is controlled to turn in a counterclockwise direction, or that the heading of the vessel 500 is controlled in a counterclockwise direction.

In another embodiment, referring to FIGS. 6A to 6C, the control device may set virtual courses 631 to 633 based on a heading direction 601 of a vessel 600 or a change in the position of the vessel 600.

For example, referring to FIG. 6A, based on the heading 601 of the vessel 600 being toward a preset course 610, the control device may obtain a position 640 that is spaced apart from the current position of the vessel 600 by a preset distance along the COG of the vessel 600. The control device may set a first virtual course 631 to include the point 640 at which a line extending along the heading of the vessel 600 intersects a virtual circle 620. For example, the first virtual course 631 may pass through another point (not shown) on the virtual circle 620 in addition to the point 640, and may be parallel to the preset course 610.

The heading 601 of the vessel 600 may be controlled to follow the generated first virtual course 631. That is, the heading 601 of the vessel 600 may be controlled to be directed toward a direction 602 for following the first virtual course 631. In the example illustrated in FIG. 6A, the heading 601 of the vessel 600 and the direction 602 for following the first virtual course 631 may be identical to each other. In another aspect, it may be understood that the vessel 600 is controlled to move closer to the preset course 610 while being controlled to maintain its current heading direction.

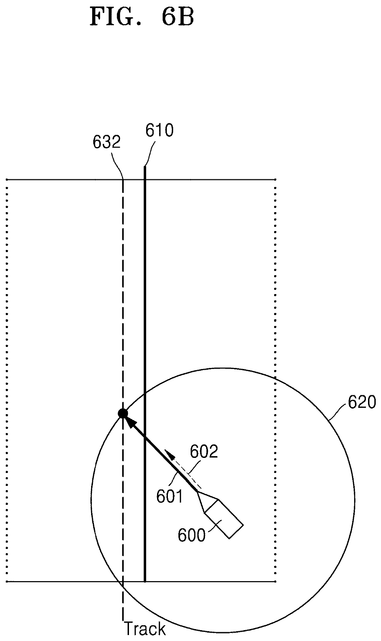

Referring to FIG. 6B, based on the heading direction of the vessel, the control device may set a second virtual course 632 in an opposite area to the area in which the vessel 600 is located, relative to the preset course 610. For example, based on the heading direction of the vessel having been directed toward the preset course 610 in response to a command to follow the first virtual course 631, the control device may set the second virtual course 632. That is, the virtual course may be shifted in position from the first virtual course 631 to the second virtual course 632 according to the heading direction of the vessel.

For example, the second virtual course 632 may include a position that is spaced apart from the current position of the vessel 600 by a preset distance along the COG of the vessel 600, and may be parallel to the preset course 610. The second virtual course 632 may pass through two arbitrary points on the virtual circle 620 and be parallel to the preset course 610. The second virtual course 632 may pass through two arbitrary points on the virtual circle 620 and be parallel to the preset course 610.

The heading 601 of the vessel 600 may be controlled to follow the generated second virtual course 632. That is, the heading 601 of the vessel 600 may be controlled to be directed toward the direction 602 for following the second virtual course 632. Compared with the direction for following the first virtual course 631 illustrated in FIG. 6A, it may be understood that, to follow the second virtual course 632, the hull of the vessel 600 is controlled to turn further in a counterclockwise direction or the heading of the vessel 600 is controlled further in a counterclockwise direction.

In an embodiment, based on the vessel 600 having moved to the opposite area, the control device may set a third virtual course that includes a point at which a line extending in the heading direction 601 of the vessel 600 intersects the virtual circle 620. Here, the line extending in the heading direction 601 of the vessel 600 may be understood as the direction of travel of the course on which the vessel 600 is actually moving. In addition, the opposite area may refer to an area opposite to the area in which the vessel 600 is located at the time when the second virtual course 632 is set. In another aspect, the opposite area may refer to the same area as the area in which the second virtual course 632 is set. In other words, when the position of the vessel 600 changes as a result of controlling the heading of the vessel 600 to follow the second virtual course 632, the position of the virtual course may be shifted from the second virtual course 632 to the third virtual course.

In an embodiment, the size of a virtual circle that serves as a basis for generating the third virtual course may be adjusted according to a change in the position of the vessel 600. For example, after the vessel 600 has moved to the opposite area, the size of the virtual circle 620 may be gradually increased based on the distance between the vessel 600 and the preset course 610 increasing.

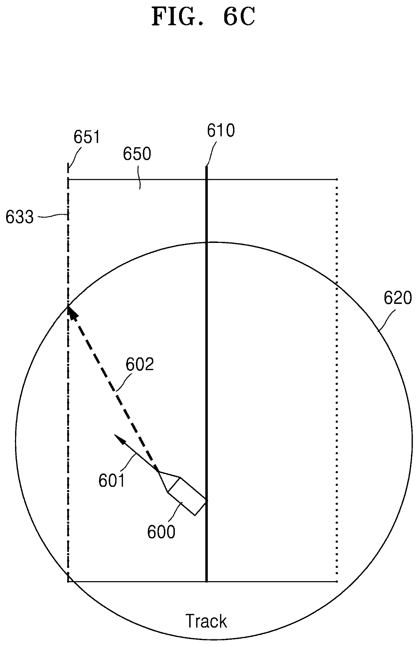

In an embodiment, as described above, the third virtual course may be set inside a limit area. For example, referring to FIG. 6C, based on a position 641, which is spaced apart from the current position of the vessel 600 by a preset distance along the COG of the vessel 600, being spaced apart from the preset course 610 by a preset limit distance or greater, the control device may set a virtual course 651 that includes a limit position 642 spaced apart from the preset course 610 by the limit distance and is parallel to the preset course. When the first point 641, at which a line extending in the heading direction 601 of the vessel 600 intersects the virtual circle 620, is located outside a limit area 650, the control device may set the third virtual course 633 to include the limit position 642 at which the boundary line 651 of the limit area 650 intersects the virtual circle 620. In other words, the third virtual course 633 may be set to include the point at which the line extending in the heading direction 601 of the vessel 600 intersects the virtual circle 620, but as in the example illustrated in FIG. 6C, the boundary line 651 of the limit area 650 may serve as the maximum limit for how far the virtual course may be from the preset course 610.

The heading 601 of the vessel 600 may be controlled to follow the generated third virtual course 633. That is, the heading 601 of the vessel 600 may be controlled to be directed toward the direction 602 for following the third virtual course 633. Referring to the example illustrated in FIG. 6C, to follow the third virtual course 633, the hull of the vessel 600 may be controlled to turn in a clockwise direction, or the heading of the vessel 600 may be controlled in a clockwise direction.

In another embodiment, referring to FIGS. 7A to 7C, the control device may set virtual courses 731 to 733 based on a heading direction 701 of a vessel 700 or a change in the position of the vessel 700.

For example, referring to FIG. 7A, based on the current position of the vessel 700 being spaced apart from a preset course 710 by a preset limit distance or greater, or being located outside a limit area 750, the control device may set the virtual course 731 that includes a limit position spaced apart from the preset course 710 by the limit distance and is parallel to the preset course. Based on the vessel 700 being located outside the limit area 750, the control device may set the fourth virtual course 731 to include a point at which a boundary line (not shown) of the limit area 750 closer to the vessel 700 intersects a virtual circle 720. For example, the vessel 700 being located outside the limit area 750 may be understood to be caused by disturbances and the inertia of the vessel 700. For example, the fourth virtual course 731 may pass through two points at which the boundary line of the limit area 750 intersects the virtual circle 720, and may be parallel to the preset course 710.

The heading of the vessel 700 may be controlled to follow the generated fourth virtual course 731. That is, the heading of the vessel 700 may be controlled to be directed toward a direction 702 for following the fourth virtual course 731. Referring to the example illustrated in FIG. 7A, to follow the fourth virtual course 731, the hull of the vessel 700 may be controlled to turn in a clockwise direction, or the heading of the vessel 700 may be controlled in a clockwise direction. Eventually, the vessel 700 may be controlled to follow the fourth virtual course 731, and thus move into the limit area 750.

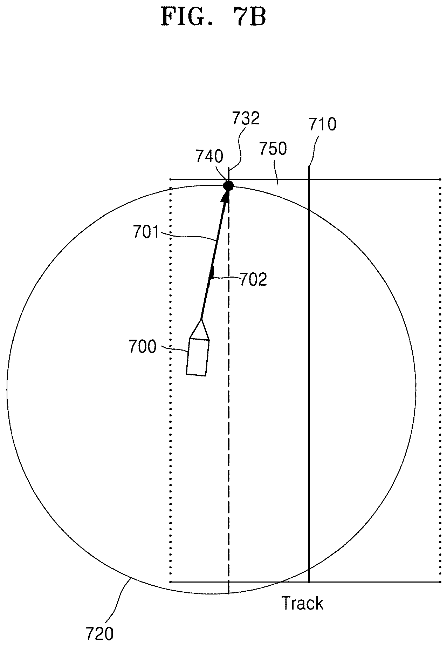

Referring to FIG. 7B, based on the current position of the vessel 700 being spaced apart from the preset course 710 by a preset limit distance or less, or being located within the limit area 750, the control device may generate a virtual course that includes a position 740 spaced apart from the current position of the vessel 700 by a preset distance along the COG of the vessel 700 and is parallel to the preset course 710. The control device may obtain the position 740, and the distance between the position 740 and the vessel 700 may decrease as the current position of the vessel 700 gets closer to the preset course 710. For example, based on the vessel 700 having moved into the limit area 750, the control device may set the fifth virtual course 732 that passes through the point 740 at which a line extending in the heading direction 701 of the vessel 700 intersects the virtual circle 720. Here, the line extending in the heading direction 701 of the vessel 700 may be understood as the direction of travel of the course on which the vessel 700 is actually moving.

In an embodiment, the fifth virtual course 732 may pass through another point (not shown) on the virtual circle 720 in addition to the point 740, and may be parallel to the preset course 710. In addition, in an embodiment, the virtual course may be understood as having been shifted in position from the fourth virtual course 731 to the fifth virtual course 732 in response to the vessel 700 having moved from outside the limit area 750 to inside the limit area 750.

The heading 701 of the vessel 700 may be controlled to follow the generated fifth virtual course 732. That is, the heading 701 of the vessel 700 may be controlled to be directed toward the direction 702 for following the fifth virtual course 732. In the example illustrated in FIG. 7B, the heading 701 of the vessel 700 and the direction 702 for following the fifth virtual course 732 may be identical to each other. In another aspect, it may be understood that the vessel 700 is controlled to move closer to the preset course 710 while being controlled to maintain its current heading direction.

In an embodiment, the size of the virtual circle 720 that serves as a basis for generating the fifth virtual course 732 may be adjusted according to a change in the position of the vessel 700. For example, after the vessel 700 has moved into the limit area 750, the size of the virtual circle 720 may be gradually decreased based on the distance between the vessel 700 and the preset course 710 decreasing.

In addition, as a result of controlling the heading of the vessel 700 to follow the fifth virtual course 732, the size of the virtual circle 720, which is the basis for generating the fifth virtual course 732, decreases as the vessel 700 gets closer to the preset course 710, and thus, the fifth virtual course 732 may be set at a position close to the vessel 700. In addition, it may be understood that as the fifth virtual course 732 gets closer to the vessel 700, the amount of change in the direction for controlling the heading of the vessel 700 decreases. Eventually, through the control process, a moment will be reached when the heading of the vessel 700 becomes parallel to the preset course 710.

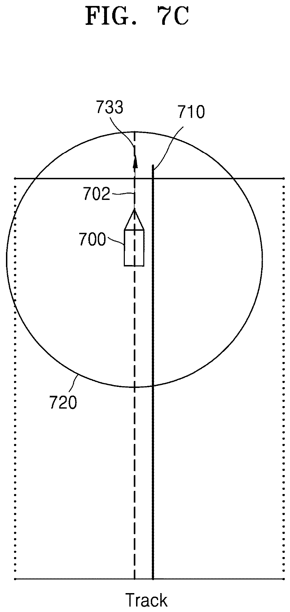

For example, referring to FIG. 7C, based on the heading direction 702 of the vessel 700, which is following the sixth virtual course 733, becoming parallel to the preset course 710, the control device may control the heading of the vessel 700 to maintain the heading direction 702 of the vessel 700.

Here, the sixth virtual course 733 may refer to a virtual course that, like the fifth virtual course 732, is set to pass through a point at which a line extending in the heading direction of the vessel 700 intersects the virtual circle 720, and that is the virtual course at the point in time when the heading direction of the vessel 700 becomes parallel to the preset course 710.

In an embodiment, the device may control the heading of the vessel 700 by considering disturbances around the vessel 700 and the inertia of the vessel 700, such that the heading direction 702 of the vessel 700 continuously follows the sixth virtual course 733.

In addition, as described above, each of the embodiments described with reference to FIGS. 5 to 7C may be understood as an embodiment in which the heading of the vessel is controlled in correspondence with a predetermined condition. However, the embodiments may also be understood as a single continuous control process. In other words, the vessel heading control processes illustrated in FIGS. 5 to 7C may also be understood as a series of control processes for controlling the heading of the vessel in a direction parallel to the preset course.

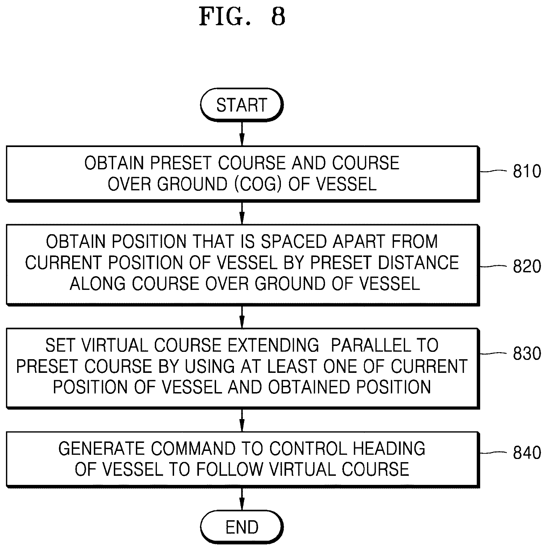

FIG. 8 is a flowchart for describing an example of a method of controlling a heading of a vessel, according to an embodiment of the present disclosure.

The operations illustrated in FIG. 8 may be performed by the above-described control device or by a processor included in the control device. In addition, some of the operations described above with reference to FIGS. 1 to 7C as being performed by the control device, including those not illustrated in FIG. 8, may be included in the method of controlling a heading of a vessel.

First, in operation 810, the control device may obtain a preset course and a COG of the vessel from among vessel data.

In operation 820, the control device may obtain a position that is spaced apart from the current position of the vessel by a preset distance along the COG of the vessel. Operation 820 may include generating, based on a mismatch between the direction of the preset course and the COG, a virtual circle having a predetermined radius based on the current position of the vessel, and determining, as the obtained position, a position at which the virtual circle and a line extending along the COG intersect each other.

In an embodiment, based on a mismatch between the direction of the preset course and the COG, the control device may generate a virtual circle having a predetermined radius based on the position of the vessel. In an embodiment, the radius of the virtual circle may be adjusted according to a change in the position of the vessel and/or the length of the vessel.

According to an embodiment, the virtual circle may be replaced with information about a position that is spaced apart from the position of the vessel by a certain distance in the current heading direction of the vessel. The certain distance may be a value that changes according to the length of the vessel and/or the position of the vessel.

In an embodiment, the preset distance (or the certain distance) may increase as the vessel gets farther away from the preset course. In another embodiment, the preset distance (or the certain distance) may decrease as the vessel moves closer to the preset course.

In operation 830, the control device may generate a virtual course extending parallel to the preset course by using the current position of the vessel and/or the obtained position. For example, the control device may set a virtual course that passes through an arbitrary point and is parallel to the preset course. For example, the arbitrary point may be a point included in the virtual circle.

In an embodiment, the virtual course may be set inside a limit area in which a distance from the preset course is less than or equal to a preset limit value.

In an embodiment, the virtual course may be set to be shifted in position according to the position of the vessel within the limit area.

In an embodiment, based on the COG of the vessel being opposite to the preset course, the control device may set a virtual course that includes the current position of the vessel and is parallel to the preset course.

In an embodiment, based on the COG of the vessel being toward the preset course, the control device may set a virtual course that includes the obtained position and is parallel to the preset course.

In an embodiment, based on the obtained position being spaced apart from the preset course by a preset limit distance or greater, the control device may set the virtual course to include a limit position spaced apart from the preset course by the limit distance and to be parallel to the preset course.

In an embodiment, based on the current position of the vessel being spaced apart from the preset course by a preset limit distance or greater, the control device may set a virtual course that includes a limit position spaced apart from the preset course by the preset limit distance and extends parallel to the preset course.

In an embodiment, based on the current position of the vessel being spaced apart from the preset course by a preset limit distance or less, the control device may set a virtual course that includes the obtained position and is parallel to the preset course, wherein the obtained position may get closer to the vessel as the current position of the vessel gets closer to the preset course.

According to an embodiment, when the virtual circle is replaced with information about a position spaced apart from the position of the vessel by a certain distance in the current heading direction of the vessel, the control device may set a virtual course that passes through the position in the information and is parallel to the preset course. In this case, the virtual circle and two arbitrary points on the virtual circle may not be required.

In operation 840, the control device may generate a command to control the heading of the vessel to follow the virtual course.

In an embodiment, based on the heading direction of the vessel, which is following the virtual course, becoming parallel to the preset course, the control device may generate a command to control the heading of the vessel to maintain the heading direction of the vessel.

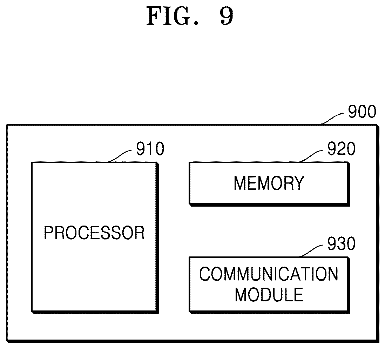

FIG. 9 is a diagram for describing an example of an internal configuration of a control device according to an embodiment of the present disclosure.

Referring to FIG. 9, a control device 900 may include a processor 910, a memory 920, and a communication module 930. For convenience of descriptions, FIG. 9 illustrates only components associated with the present disclosure. Thus, the control device 900 may further include other general-purpose components, in addition to the components illustrated in FIG. 9. In addition, it is obvious to those of skill in the art related to the present disclosure that the processor 910, the memory 920, and the communication module 930 illustrated in FIG. 9 may be implemented as independent devices.

The processor 910 may process instructions of a computer program by performing basic arithmetic, logic, and input/output operations. Here, the instructions may be provided from the memory 920 or an external device. In addition, the processor 910 may control the overall operation of other components included in the device 900.

For example, the processor 910 may control at least some of the operations of the control device 900 described in the present specification.

The processor 910 may be implemented as an array of a plurality of logic gates, or may be implemented as a combination of a general-purpose microprocessor and a memory storing a program executable by the microprocessor. For example, the processor 910 may include a general-purpose processor, a central processing unit (CPU), a microprocessor, a digital signal processor (DSP), a controller, a microcontroller, a state machine, and the like. In some environments, the processor 910 may include an application-specific integrated circuit (ASIC), a programmable logic device (PLD), a field-programmable gate array (FPGA), and the like. For example, the processor 910 may refer to a combination of processing devices, such as a combination of a DSP and a microprocessor, a combination of a plurality of microprocessors, a combination of one or more microprocessors combined with a DSP core, or a combination of any other such configurations.

The memory 920 may include any non-transitory computer-readable recording medium. For example, the memory 920 may include a permanent mass storage device, such as random-access memory (RAM), read-only memory (ROM), a disk drive, a solid-state drive (SSD), or flash memory. As another example, the permanent mass storage device, such as ROM, an SSD, flash memory, or a disk drive, may be a permanent storage device separate from the memory. In addition, the memory 920 may store an operating system (OS) and at least one piece of program code (e.g., code for the processor 910 to perform the operations described above as being performed by the control device).

These software components may be loaded from a computer-readable recording medium separate from the memory 920. The separate computer-readable recording medium may be a recording medium that may be directly connected to the control device 900, and may include, for example, a computer-readable recording medium, such as a floppy drive, a disk, a tape, a digital video disc (DVD)/compact disc ROM (CD-ROM) drive, or a memory card. Alternatively, the software components may be loaded into the memory 920 through the communication module 930 rather than a computer-readable recording medium. For example, at least one program may be loaded into the memory 920 on the basis of a computer program (e.g., a computer program for the processor 910 to perform the operations described above as being performed by the control device) installed by files provided via the communication module 930 by developers or a file distribution system that distributes installation files of applications.

The communication module 930 may provide a configuration or function for the control device 900 and an external device (e.g., an external server (not shown)) to communicate with each other through a network. For example, a control signal, a command, data, and the like provided under control of the processor 910 may be transmitted to an external device through the communication module 930 and a network.

The operations of the methods according to the present disclosure may be performed in any suitable order unless otherwise indicated herein or otherwise clearly contradicted by context. The present disclosure is not limited to the described order of the operations. The use of any and all examples, or exemplary language (e.g., 'and the like") provided herein, is intended merely to better illuminate the present disclosure and does not pose a limitation on the scope of the present disclosure unless otherwise claimed. Also, numerous modifications and adaptations will be readily apparent to those skilled in the art without departing from the spirit and scope of the present disclosure.

Accordingly, the spirit of the present disclosure should not be limited to the above-described embodiments, and all modifications and variations which may be derived from the meanings, scopes and equivalents of the claims should be construed as falling within the scope of the present disclosure.

## Claims

1. A method of controlling a heading of a vessel, the method comprising:
obtaining a preset course and a course over ground (COG) of the vessel;
obtaining a position that is spaced apart from a current position of the vessel by a preset distance along the COG of the vessel;
setting a virtual course that extends parallel to the preset course, by using at least one of the current position of the vessel and the obtained position; and
generating a command to control the heading of the vessel to follow the virtual course.

2. The method of claim 1, wherein the preset distance comprises a value that changes according to at least one of a length of the vessel and a position of the vessel.

3. The method of claim 2, wherein the preset distance increases as the vessel gets farther away from the preset course.

4. The method of claim 2, wherein the preset distance decreases as the vessel gets closer to the preset course.

5. The method of claim 1, wherein the virtual course is set inside a limit area in which a distance from the preset course is less than or equal to a preset limit value.

6. The method of claim 5, wherein the virtual course is set to be shifted in position based on a heading direction of the vessel.

7. The method of claim 1, wherein the setting of the virtual course comprises setting, based on the COG of the vessel being opposite to the preset course, the virtual course to include the current position of the vessel and to be parallel to the preset course.

8. The method of claim 1, wherein the setting of the virtual course comprises setting, based on the COG of the vessel being toward the preset course, the virtual course to include the obtained position and to be parallel to the preset course.

9. The method of claim 1, wherein the setting of the virtual course comprises setting, based on the obtained position being spaced apart from the preset course by a preset limit distance or greater, the virtual course to include a limit position spaced apart from the preset course by the limit distance and to be parallel to the preset course.

10. The method of claim 1, wherein the setting of the virtual course comprises setting, based on the current position of the vessel being spaced apart from the preset course by a preset limit distance or greater, the virtual course to include a limit position spaced apart from the preset course by the preset limit distance and to extend parallel to the preset course.

11. The method of claim 1, wherein the setting of the virtual course comprises
setting, based on the current position of the vessel being spaced apart from the preset course by a preset limit distance or less, the virtual course to include the obtained position and to be parallel to the preset course, and
the obtained position gets closer to the vessel as the current position of the vessel gets closer to the preset course.

12. The method of claim 1, wherein the generating of the command to control the heading of the vessel comprises generating, based on a heading direction of the vessel that follows the virtual course becoming parallel to the preset course, the command to maintain the heading of the vessel.

13. The method of claim 1, wherein the obtaining of the spaced-apart position comprises:
generating, based on a mismatch between a direction of the preset course and the COG, a virtual circle having a predetermined radius based on the current position of the vessel; and
determining, as the obtained position, a position at which the virtual circle and a line extending along the COG intersect each other.

14. A control device comprising:
at least one memory; and
at least one processor,
wherein the at least one processor is configured to obtain information about a position that is spaced apart from a current position of a vessel by a preset distance along a course over ground of the vessel, generate a virtual course that includes the information about the position and is parallel to a preset course, generate a command to control a heading of the vessel to follow the virtual course, and transmit the command to an onboard control device.

15. A computer-readable recording medium having recorded thereon a program for causing a computer to execute the method of claim 1.
